Europäisches Patentamt

(19) European Patent Office  (11) Numéro de publication: **0 151 375**

Office européen des brevets  **B1**

(12) **FASCICULE DE BREVET EUROPEEN**

(45) Date de publication du fascicule du brevet: **24.10.90**  (51) Int. Cl.⁵: **G 01 N 35/00, G 01 N 33/48**

(21) Numéro de dépôt: **84830361.6**

(22) Date de dépôt: **28.12.84**

(54) Unité de travail autonome pour l'analyse automatique et la gestion analytique des données dans des laboratoires chimico-cliniques.

(30) Priorité: **30.12.83 IT 2444983**

(43) Date de publication de la demande:
**14.08.85 Bulletin 85/33**

(45) Mention de la délivrance du brevet:
**24.10.90 Bulletin 90/43**

(84) Etats contractants désignés:
**AT BE CH DE FR GB LI LU NL SE**

(56) Documents cités:
**EP-A-0 052 006**
**US-A-4 271 123**
**US-A-4 322 216**
**US-A-4 539 645**

(73) Titulaire: **ISTITUTO BEHRING S.p.A.**
**S.S. 17 Km. 22**
**I-Scoppito (L'Aquila) (IT)**

(72) Inventeur: **Peracino, Andrea**
**Via Quasimodo 1**
**Vimodrone (Milan) (IT)**

(74) Mandataire: **Righetti, Giuseppe**
**Bugnion S.p.A. Via Carlo Farini, 81**
**I-20159 Milano (IT)**

Courier Press, Leamington Spa, England.

## Description

On sait que les laboratoires chimico-cliniques ont subi, tout récemment, une évolution remarquable dans le domaine des analyses effectuées sur la base d'échantillons prélevés des patients.

Au début ces analyses étaient effectuées complètement à la main. Dans une éprouvette contenant un échantillon (par exemple du sérum humain) on ajoutait le réactif nécessaire à la mesure suivante, on agitait l'éprouvette qui était incubée à des températures déterminées pendant une certaine période de temps; pendant cette période, en fonction de la composition et de la valeur de paramètres spécifiques du sérium, il y avait une réaction avec formation de "couleur" du mélange, qui déterminait une absorbance "spécifique" à une longueur d'onde déterminée. Sur la base de cela on utilisait des instruments dénommés "photomètres" qui, se basant sur l'intensité lumineuse qui passait à travers le mélange coloré et qui était captée par une cellule photoélectrique ou similaire, fournissaient la valeur électrique fonction de la concentration de la substance à mesurer, présente dans le sérium échantillon.

On a ensuite ressenti l'exigence d'automatiser de quelque manière ces analyses, à cause du nombre élevé, qui d'autre part allait toujours croissant, d'analyses et épreuves à effectuer dans un même laboratoire chimico-clinique.

Une première tentative d'automation des analyses a été effectuée à travers les systèmes dénommés à "flux continu" dans lesquels une série du tuyaux reliés l'un à l'autre de manière particulière, prélevaient d'une part l'échantillon et d'autre part le réactif (aidés par des pompes péristaltiques) et mélangeaient ensuite les deux substances.

Normalement chaque échantillon était prélevé par le tuyau et subdivisé dans un train de parties séparées par des bulles d'air, où chaque partie était destinée à être ensuite mélangée avec le réactif. Le train de parties d'échantillon était après suivi d'un train de fluide inerte qui avait pour but de laver le tuyau; d'autres échantillons suivaient, etc. En tout cas chaque échantillon était mélangé avec le réactif à l'intérieur d'une petite cuve justement appelée à flux continu, du fait que le liquide y passait sans interruption. La petite cuve était traversée par l'axe optique d'un instrument photométrique et on pouvait lire la quantité de concentration de la substance à mesurer.

Le principal inconvénient de ce premier système d'automation étant dû au fait qu'il y avait le risque que des mélanges non désirés pouvaient se produire, du fait que le flux était continu depuis le prélèvement de l'échantillon jusqu'à sa mesure. En outre, tout le chemin pour arriver à la mesure était assez lent.

Un autre désavantage non négligeable était celui relatif au fait que chaque séquence de mesure était obligée, n'étant pas possible de passer d'un échantillon, qui pouvait être l'actuel, à un échantillon qui ne fût pas celui adjacent.

Les désavantages mentionnés ci-dessus ont été éliminés par les systèmes dénommés "discrets".

Ces derniers comportaient un plateau tournant contenant un grand nombre d'éprouvettes, chacune avec son échantillon. Celui-ci était prélevé et transféré dans un deuxième plateau où il y avait une éprouvette pour chaque échantillon, dans laquelle ou ajoutait un réactif pour former le mélange de réaction correspondant. La mesure à travers les instruments photométriques usuels pouvait avoir lieu ensuite soit directement sur ledit deuxième plateau, faisant tourner ce dernier de manière que chaque éprouvette pouvait se trouver en correspondance et l'instrument photométrique à chaque tour, soit effectuant un nouveau transfert du mélange par aspiration dans une ou plusieurs petites cuves, où la mesure avait lieu au moyen du même instrument photométrique.

Il est évident que ce système, tout en éliminant les inconvénients des systèmes à flux continu, implique la nécessité d'un appareillage très complexe et avec un nombre remarquable d'organes mécaniques mobiles.

Les problèmes liés à cette complexité ont été ensuite partiellement résolus par l'introduction des systèmes assistés d'un ordinateur qui gérait tous les moteurs et les organes mécaniques des systèmes, lesquels tiraient leur origine principalement des expériences acquises dans les systèmes appelés centrifuges. Ces derniers comportaient des plateaux pourvus d'une pluralité de puisards distribués radialement, où l'on distribuait tant le réactif que l'échantillon, au début séparés l'un de l'autre. Les plateaux, en tournant, causaient le mélange par effet de la force centrifuge et le mélange ainsi obtenu passait sous un axe optique à chaque tour et plusieurs fois dans l'unite de temps. En vue d'obtenir la plus grande rapidité d'analyse, on avait utilisé dans ce cas un ordinateur qui devait recueillir les données de chaque mélange individuel à chaque passage, distinguer le signal d'une petite cuve de celui des autres petites cuves, le mémoriser et ainsi de suite, reconstruisant la réaction de chaque petite cuve et imprimant les données y relatives.

L'utilisation et la combinaison d'un ordinateur avec le système à donné une poussée remarquable aux capacités d'automation des actuels laboratories chimico-cliniques. En effet, actuellement ces laboratoires sont divisés en plusieurs secteurs dans chacun desquels est présent l'un des systèmes déjà vus, qui sont maintenant définis "instruments". Dans certaines situations, chaque "instrument" peut être relié à un éventuel gros ordinateur central qui a pour fonction d'organiser mécaniquement les instruments et de gérer et traiter les données de laboratoire. Le même ordinateur s'occupe également des questions administratives et pratiques de tout le laboratoire.

Essentiellement donc chaque secteur qui comporte un instrument est simplement géré par un opérateur ayant des fonctions de bas niveau, dont la tâche n'est limitée qu'à la préparation des réactifs, au changement des échantillons dans l'instrument, à la définition des épreuves et à la surveillance du même instrument.

Il n'y a qu'un opérateur qui peut être considéré de niveau élevé, celui qui s'occupe directement de l'ordinateur.

Evidemment le fait de confier à un seul opérateur ayant des fonctions de niveau élevé toute la responsabilité du laboratoire représente un inconvénient remarquable. En effet, normalement cet opérateur se trouve toujours dans l'impossibilité d'effectuer des contrôles immédiats sur les différentes réactions, sur les examens et sur les interventions qui se rendraient nécessaires sur un ou plusieurs instruments. La fiabilité donc de tout le laboratoire n'est pas excellente et en tout cas toujours "retardée".

Dans le document US—A—4271123 on décrit un système automatique pour exécuter des analyses immunologiques par des mesures en fluorescence. Bien que ce dispositif remplisse de manière efficace ses fonctions, il est dépourvu d'un ordinateur extérieur, exécute l'intégrale d'une émission de lumière stimulée et présente autant de cuvettes de réaction que d'échantillons. On peut donc facilement déduire que cet appareil est assez lent quand on doit exécuter des analyses différentes sur un même échantillon et, du fait qu'il est équipé d'un seul poste de lecture, il fournit des données qui peuvent donner lieu à des retards ou à des erreurs.

Dans le US—A—4322216 on décrit un appareil pour distribuer des liquides dans une cellule de réaction d'un dispositif automatique de manipulation d'échantillons. Bien que cet appareil soit en mesure de fournir des améliorations quant à la distribution du liquide à analyser, il présente plusieurs désavantages, surtout en ce qui concerne l'automation du prélèvement des reactifs, du mélange et de la lecture des résultats obtenus. Tant dans ce brevet que dans le précédent il n'existe pas de systèmes de lavage et par conséquent on ne peut pas oublier le danger de pollutions et donc de résultats faussés.

En tout cas les dispositifs précités sont tous les deux complètement différents, en ce qui concerne leur but final, du système décrit dans la demande faisant l'objet de la présente invention.

Une amélioration technique importante a été fournie par l'appareil décrit dans le document EP—A—0052006. Toutefois, bien que cet appareil réunisse en soi les qualités d'automation de prélèvement, mélange et lecture des données, il présente encore des désavantages non négligeables. Il faut surtout mettre en évidence le prix de revient élevé, la délicatesse de fonctionnement et la dangereuse possibilité de résultats faussés, étant donné que le mélange des réactifs et de l'échantillon, la réaction et la lecture ont lieu dans le même plateau. En outre le système de lavage est inadéquat surtout si l'on travaille avec des substances polluantes; de plus il est vraiment trop lent quand on doit faire des analyses différentes sur un même patient. En effet le dispositif Hitachi n'est pas en état d'exécuter des analyses individuelles sur des échantillons différents (par exemple l'examen du chloestérol), mais il doit exécuter d'abord tous les examens pour lesquels il est arrangé sur un échantillon, avant d'être en état de passer à l'échantillon suivant.

La présente invention a donc pour but de mettre à la disposition un dispositif pour l'analyse chimique automatique qui ne présente pas tous les désavantages des dispositifs connus, notamment on désire proposer un appareil qui soit complètement fiable, tout à fait automatisé et capable de fournir rapidement des données précises et sûres sans le risque d'erreurs et de retards.

Un autre but de la présente invention est de fournir une unité de travail complètement autonome, pour l'analyse automatique et la gestion analytique simultanée des données, sans la nécessité de supervision de la part de gros ordinateurs centralisés. En définitive donc cette invention a pour but de structurer de manière complètement différente le laboratoire chìmico-clinique en le pourvoyant, dans chacun de ses secteurs, d'une unité de travail autonome, complètement indépendante. De cette manière tous les opérateurs relatifs à ces unités peuvent intervenir et interagir avec l'instrument à tout moment, peuvent décider très rapidement les procédures nécessaires peuvent modifier, changer, ajouter ou fournir de nouvelles données et, naturellement, surveiller la gestion mécanique de chaque instrument individuel, intervenant en tout cas, en temps réel, de manière à pouvoir attester la qualité des résultats atteints.

La fonction donc de ces opérateurs commence par la préparation de l'instrument et la définition des épreuves à exécuter sur les échantillons et se termine éventuellement par la procédure administrative. Parallèlement, le coût pour organiser un laboratoire chimico-clinique de ce genre est inférieur ou tout au plus égal à celui des laboratoires chimico-cliniques actuels, qui utilisent le gros ordinateur centralisé.

Un autre but de l'invention est de fournir le meilleur rapport entre l'instrument et un petit ordinateur étroitement lié à celui-ci, particulièrement concu, de manière qu'il fournisse d'une part toute la gestion mécanique optimale de l'instrument et d'autre part soit en mesure d'interagir en même temps et à tout moment avec l'opérateur, pour la gestion complète des données et la synchronisation de toutes les opérations et de toutes les étapes de chaque analyse.

Ces buts sont atteints par l'unité de travail en question, laquelle comporte essentiellement:

—un premier poste de collecte de tous les échantillons à examiner et de distribution d'une portion individuelle d'échantillon par fois et suivant une séquence commandée par un microprocesseur;

—un deuxième poste d'analyse et de mesure de chaque portion individuelle d'échantillon fourni par le premier poste, commandé par un autre microprocesseur; et

—un ordinateur principal destiné à gérer toutes les données de base et à synchroniser les activités des deux microprocesseurs;

laquelle est caractérisée en ce que lesdits microprocesseurs étant destinés respectivement et exclusivement à commander les activités et les temps d'intervention des organes moteurs et mécaniques des deux postes, que ledit ordinateur étant pourvu d'une unité périphérique pour l'interaction avec l'opérateur, laquelle comporte un clavier et un écran divisé en deux portions vidéo destinées respectivement à visualiser le contrôle du procédé au premier niveau et à visualiser les interactions actuelles de l'opérateur avec l'ordinateur au deuxième niveau, et en ce que lesdites interactions avec l'opérateur font du système un poste de travail complet, du fait que le logiciel de l'ordinateur principal contient les fonctions de (a) programme de gestion d'analyse, (b) calibrage des données du patient et type d'analyse correspondante, (c) résultats et production des rapports, et (d) contrôle de la qualité.

Le choix judicieux de l'instrument utilisé, sa structure particulière et la sélection de programmes particuliers, dans l'ensemble et en combinaison, permettent d'obtenir une unité de travail complètement autonome dans chaque poste de travail du laboratoire chimico-clinique, le tout à des prix vraiment bas si comparés aux performances fournies par ladite unité de travail.

D'autres caractéristiques et avantages ressortiront plus clairement de la description détaillée de l'invention, donnée à simple titre d'exemple non limitatif en seréférant aux dessins annexés dans lesquels:

—la figure 1 montre un schéma de principe de base de l'unité de travail objet de l'invention;

—la figure 2 montre un schéma-bloc d'exemple de la structure de l'unité de travail;

—la figure 3 montre un exemple de mise en oeuvre schématique des deux postes appartenant à l'unité de travail prise en examen.

En se référant aux dessins annexés, l'unité de travail objet de l'invention comporte, en combinaison et reliés l'un à l'autre de manière étroite, un premier poste 1 de collecte des échantillons C à examiner, aménagé de manière à distribuer une quantité individuelle d'échantillons chaque fois et en séquence, un deuxième poste 2 d'analyse et de mesure de la quantité d'échantillons C distribuée; ces postes sont commandés respectivement par le microprocesseur EC1 et EC2, où ces deux microprocesseurs sont destinés respectivement et exclusivement à commander les activités et les temps d'intervention des organes moteurs et mécaniques des postes 1 et 2.

L'ordinateur EP ou 3 effectue une gestion mécanique destinée à gérer toutes les données de base et à synchroniser les activités des microprocesseurs EC1 et EC2.

Toutes les fonctions de l'ordinateur principal EP sont programmées en un langage très concis et à niveau élevé, tel que le langage Pascal. Les communications entre les microprocesseurs et l'ordinateur principal ont lieu au moyen d'un protocole de communication en code à travers une interface sérielle IS. L'interaction de l'opérateur avec l'ordinateur a lieu à travers une unité périphérique pourvue d'un clavier T et un écran divisé en deux portions vidéo VS et VI, respectivement destinées à visualiser les deux niveaux de contrôle. Les communications entre l'unité périphérique et l'ordinateur principal EP ont lieu à travers une interface parallèle IP. Le contrôle au premier niveau exercé par les deux microprocesseurs libère l'ordinateur principal EP de ces tâches, de manière qu'il puisse se dédier à l'interaction avec l'utilisateur, à la manipulation des données et à la synchronisation des activités des microprocesseurs.

Egalement la structure particulièrement efficace et simplifiée à un niveau mécanique des deux postes contribue à la réduction, pour autant que possible, du nombre des données à manipuler. Notamment le poste 1 comporte un plateau AS en forme de disque, disposé horizontalement et destiné à soutenir les échantillons C situés le long de son pourtour. Le plateau AS est tournant dans les deux sens $S_1$ et $S_2$ autour de son axe et il est pourvu, le long de la circonférence de distribution des échantillons C, d'un trou de passage 50 à axe vertical. Un dispositif de prélèvement de chaque échantillon individuel, comportant dans ce cas un "micropettor" indiqué en MP, est disposé au-dessus de et sur la perpendiculaire à la circonférence de distribution des échantillons. Le micropettor MP est mobile, sur la verticale, dans les deux sens $S_3$ et $S_4$, d'une première position extrême relevée de repos, à une deuxième position intermédiaire abaissée de prélèvement d'une portion de l'échantillon individuel C du plateau AS, à une troisième et dernière position extrême abaissée de distribution de la portion de l'échantillon prélevé audit poste 2 d'analyse et de mesure. L'organe de prélèvement et de distribution comporte un commun tube capillaire 51, destiné à prélever l'échantillon le plus rapidement possible (en effet le plateau AS tourne dans les deux sens) et à passer à travers le trou 50 librement pour la distribution du même échantillon. Evidemment les organes moteurs du plateau AS et du micropettor MP sont mis en mouvement selon des temps et des séquences fournis par l'ordinateur 3 et en tout cas en phase entre eux.

Ledit deuxième poste 2 est avantageusement divisé en deux sous-systèmes 2a et 2b qui fonctionnent séparément, en vue de séparer les problèmes physiques du mélange entre chaque portion d'échantillon et le réactif d'avec ceux de la mesure du mélange ainsi obtenu, tel qu'il sera mis en évidence par la suite.

Le premier sous-système 2a comporte, dans l'exemple illustré sur la figure 3, une pluralité de contenants de réactifs $R_1$, $R_2$, $R_3$ et $R_4$, chacun pourvu de pompes volumetriques $PR_1$, $PR_2$, $PR_3$ et $PR_4$, effectuant l'introduction de chaque réactif individuel, en séquence organisée, à travers une jonction J, à une chambre de mélange M, disposée au-dessous du plateau AS, sur la verticale du micropettor MP. La chambre de mélange M est donc destinée à recevoir la portion d'échantillon C fournie par le micropettor MP, à travers le trou de passage 50, ainsi que le respectif réactif R, pour la formation du mélange échantillon-réactif destiné à l'analyse suivante. Le sous-système 2a prévoit également un contenant de liquide détergent LD, pourvu de sa pompe respective PLD reliée elle-aussi à la chambre de mélange M et effectuant le lavage de la chambre de mélange alternativement et immédiatement après l'évacuation de la chambre M du mélange y contenu et distribué dans le sous-système 2b, qui sera illustré par la suite.

Evidemment toutes les pompes précitées peuvent être activées suivant des temps et des séquences fournis encore par l'ordinateur 3 et en phase avec la distribution de la portion d'échantillon du micropettor MP, de manière qu'à l'intérieur de la chambre M il y a la confluence d'un seul réactif par fois et de la portion correspondante d'échantillon, alternés au liquide détergent pour le nettoyage et la préparation de la même chambre pour l'opération suivante. Une autre pompe PC est reliée à la chambre de mélange M et sert au contrôle du niveau de réactif présent à l'intérieur de la même chambre, ainsi qu'à l'évacuation du liquide détergent, après chaque nettoyage de la chambre M, ce liquide étant évacué dans un réservoir de décharge W.

Le deuxième sous-système 2b, qui est celui correspondant à la mesure réelle du mélange échantillon-réactif, prévoit essentiellement une série de cuvettes, dans le cas de la figure 3 $C_1$, $C_2$, $C_3$ et $C_4$, chacune traversée par l'axe optique du système photométrique 22 pour la détermination de l'analyse du mélange y fourni par la chambre de mélange M. Chaque cuvette $C_1$, $C_2$, $C_3$ et $C_4$ prévoit une pompe correspondante $PC_1$, $PC_2$, $PC_3$ et $PC_4$, destinée à l'évacuation du mélange, à la fin de chaque analyse et une pompe correspondante $PLD_1$, $PLD_2$, $PLD_3$ et $PLD_4$, destinée au lavage de la cuvette après chaque évacuation du mélange respectif.

Il existe enfin une autre pompe PA, qui est utilisée en vue de créer des segments air-mélange-air dans la première quote-part du mélange, dans le but de fournir à la surface de la cuvette une meilleure "action baignante".

Pendant que la distribution des mélanges à l'intérieur des cuvettes a lieu "à flux continu", le tout contrôlé par un normal dispositif hydraulique non représenté sur les figures, le système photmétrique 22 effectue une analyse simultanée, amplifiant les possibilités d'utilisation par unité de temps de l'instrument, justement grâce à la présence d'une pluralité de cuvettes et non d'une seule cuvette de mesure.

Notamment, le système photométrique 22 comporte une lampe L, qui agit sur un système de focalisation FS, sur lequel interagit un disque FW pourvu de portions filtrantes et d'une seule position supplémentaire couverte pour lire le zéro. A la sortie du système de focalisation FS il y a des fibres optiques, en quantité égale au nombre des cuvettes, qui dirigent le rayon de lumière, à la longueur d'onde désirée, vers le mélange à l'intérieur des cuvettes. Du côté opposé aux fibres optiques, par rapport à chaque cuvette, il y a des photosenseurs $D_1$, $D_2$, $D_3$ et $D_4$ respectifs, lesquels, sur la base de l'intensité lumineuse détectée, fournissent en sortie des nombres déterminés d'impulsions calculées mathématiquement et déjà exprimées en un langage compréhensible directement par l'ordinateur.

En ce qui concerne également le deuxième sous-système 2b tous les temps et les séquences des différentes opérations sont fournis et contrôlés par l'ordinateur 3, de manière à distribuer chaque fois et en séquence continue, chaque mélange dans la cuvette qui apparaît libérée du mélange précédemment examiné et lavée et donc aménagée à accepter le mélange suivant à analyser et ainsi de suite. Le tout sans la présence de temps morts.

Pour plus d'exhaustivité il faut remarquer enfin, même si cela ne fait pas l'objet de la présente invention, que toutes les réactions doivent avoir lieu à une température contrôlée, du fait que la vitesse de développement d'une couleur déterminée ou d'une substance déterminée est conditionnée par la température. Tout le système est donc immergé en milieux à température constante et prédéterminée.

On va maintenant décrire le fonctionnement de l'invention en se référant à l'exemple illustré ci-dessous.

D'abord l'opérateur préparera les différents réactifs, chargera les échantillons sur le plateau AS, établira les épreuves à effectuer sur chaque échantillon et contrôlera le bon fonctionnement de tous les moyens mécaniques, électriques et hydrauliques.

Les opérations commencent par le micropettor MP qui prélève un premier échantillon, déterminé et individualisé de manière spécifique par l'analyse de l'ordinateur sur toutes les données de départ; il le distribue ensuite dans la chambre de mélange M où, dans l'entre-temps, l'une des pompes PR a causé l'arrivée du réactif correspondant R. La chambre de mélange M est soumise à l'action d'un agitateur magnétique en vue d'obtenir le mélange qui sera ensuite distribué, par exemple dans la première cuvette $C_1$. La chambre de mélange M, après avoir été lavée par la pompe PLD, est prête à recevoir un nouveau mélange à distribuer aux cuvettes suivantes.

Evidemment, entre-temps, le micropettor MP sera prêt à une nouvelle intervention de distribution au même instant dans lequel la chambre de mélange M est prête. Les mesures dans les cuvettes $C_1$, $C_2$, $C_3$ et $C_4$ ont lieu simultanément, mais décalées dans le temps de manière suffisante à permettre au micropettor MP de prélever un échantillon suivant et préparer un autre mélange, qui sera distribué dans la cuvette qui, entre-temps, a été libérée, étant la mesure dans celle-ci déjà terminée. Ces étapes essentielles sont répétées sans interruption de manière séquentielle dans le temps, éliminant pratiquement les temps morts.

Il faut remarquer également qu'à la fin de toutes les mesures l'operateur, qui entre-temps peut avoir "parlé" avec l'ordinateur chaque fois que cela s'est rendu nécessaire, s'occupéra de valider les données avant la production des rapports sur les mesures et les résultats relatifs à chaque patient. Ces mesures sont particulièrement fiables du fait que l'ordinateur a la possibilité de la gestion de toutes les données des réactions au fur et à mesure qu'elles se produisent et de les comparer avec celles d'un échantillon connu (échantillon de contrôle de qualité). C'est seulement quand les données détectées sont compatibles, dans un certain champ prédéterminé, que la mesure est exacte; dans le cas contraire le même ordinateur a la possibilité d'informer l'opérateur qu'une certaine mesure ou un certain examen ne sont pas fiables.

En conclusion, une conformation particulière de l'instrument d'une part et une structure particulière de l'ordinateur d'autre part, ceux-ci étant étroitement reliés l'un à l'autre, permettent d'un côté la gestion mécanique et en même temps, de l'autre côté, la gestion de toutes les données (même détectées à une époque précédente par rapport à celle actuelle), dans la sphère du même poste de travail. Les procédures administratives et en tout cas les procédures qui sont directement liées à la gestion mécanique directe de l'instrument peuvent indifféremment être exécutées dans chaque poste individuel de travail. De cette façon il est évident que chaque poste individuel de travail peut devenir complètement autonome, du point de vue des analyses, du point de vue de la gestion des données analytiques, ainsi que du point de vue administratif. Tous les postes de travail deviennent donc fonctionnant à tous les niveaux dans le même laboratoire.

## Revendications

1. Unité de travail autonome pour l'analyse automatique et la gestion analytique des données dans des laboratoires chimico-cliniques, comportant:
—un premier poste (1) de collecte de tous les échantillons (C) à examiner et de distribution d'une portion individuelle d'échantillon (C) par fois et suivant une séquence commandée par un microprocesseur (EC1);
—un deuxième poste (2) d'analyse et de mesure de chaque portion individuelle d'échantillon (C) fourni par le premier poste (1), commandé par un autre microprocesseur (EC2); et
—un ordinateur principal (EP) destiné à gérer toutes les données de base et à synchroniser les activités des deux microprocesseurs (EC1 et EC2), lesdits microprocesseurs (EC1 et EC2) étant destinés respectivement et exclusivement à commander les activités et les temps d'intervention des organes moteurs et mécaniques des deux postes (1 et 2) et ledit ordinateur (EP) étant pourvu d'une unité périphérique pour l'interaction avec l'opérateur, laquelle comporte un clavier (T) et un écran divisé en deux portions vidéo (VS et VI) destinées respectivement à visualiser le contrôle du procédé au premier niveau et à visualiser les interactions actuelles de l'opérateur avec l'ordinateur (EP) au deuxième niveau.

2. Unité de travail selon la revendication 1, dans laquelle lesdites interactions avec l'opérateur font du système un poste de travail complet, du fait que le logiciel de l'ordinateur (EP) contient les fonctions de:
—programme de gestion de l'analyseur à travers la gestion des deux microprocesseurs;
—protocoles d'analyse;
—calibrage des données du patient et type d'analyse correspondante;
—résultats et production des rapports; et
—contrôle de la qualité.

3. Unité de travail selon les revendications 1 et 2, dans laquelle ledit premier poste (1) comporte (a) un plateau porte-échantillons (AS) en forme de disque, disposé horizontalement et tournant autour de son axe, où les échantillons individuels sont disposés sur le pourtour du plateau le long de son bord, et (b) un dispositif de prélèvement de chaque échantillon individuel comportant un micropettor (MP), ledit plateau porte-échantillons (AS) étant pourvu d'au moins un trou de passage (50) disposé sur la circonférence de distribution des échantillons (C) et à axe verticale parallèle à l'axe de rotation dans les deux sens (S1 et S2) du plateau (AS).

4. Unité de travail selon la revendication 3, ledit micropettor (MP) étant disposé au-dessus de et sur la perpendiculaire à la circonférence de distribution des échantillons (C) et se déplaçant, en phase avec la rotation du plateau (AS), d'une première position de repos à une deuxième position de prélèvement d'une portion de l'échantillon individuel (C) du plateau (AS) et enfin à une troisième position finale de distribution de la portion d'échantillon prélevée au poste (2) d'analyse et mesure.

5. Unité de travail selon la revendication 4, dans laquelle la distribution de l'échantillon (C) au poste d'analyse et mesure a lieu par le libre passage du tube capillaire (51) du micropettor (MP) à travers le trou de passage (50) positionné dans ce cas automatiquement sur la perpendiculaire du tube capillaire (51).

6. Unité de travail selon les revendications 4 et 5, le poste (2) étant divisé en deux sous-systèmes (2a et 2b) fonctionnant séparément, dont le premier aboutit à une chambre de mélange (M) destinée à recevoir l'échantillon (C) et le réactif respectif (R), tandis que le second aboutit à un poste de cuvettes (C1—Cn) dont chacune est traversée par l'axe optique d'un système photométrique (22) pour la détermination de l'analyse du mélange y fourni par la chambre de mélange (M).

7. Unité de travail selon la revendication 6, ledit premier sous-système (2a) comportant (a) une pluralité de contenants de réactifs (R1—Rn), dont chacun est muni de pompes (PR1—PRn) et (b) un contenant de liquide détergent (LD) avec sa pompe respective (PLD).

8. Unité de travail selon la revendication 7, toutes les pompes étant reliées à la chambre de mélange (M) et pouvant être actionnées suivant des temps et des séquences fournis par l'ordinateur, de manière qu'à l'intérieur de ladite chambre de mélange (M) il y ait la confluence d'un seul réactif (R) par fois et de la correspondante portion d'échantillon (C) alternés au liquide détergent pour le nettoyage et la préparation de la chambre (M) pour l'opération suivante.

9. Unité de travail selon les revendications 6 à 8, les mélanges préparés dans la chambre de mélange (M) étant fournis à flux continu et en séquence aux cuvettes (C1—Cn) qui sont simultanément lues par le système photométrique (22).

10. Unité de travail selon la revendication 9, chaque cuvette (C1—Cn) étant munie d'une pompe (PC1—PCn) pour l'évacuation du mélange à la fin de chaque analyse et d'une pompe correspondante (PLD1—PLDn) pour le lavage de la cuvette après chaque évacuation du mélange.

**Patentansprüche**

1. Unabhängige Arbeitseinheit zur selbstättigen Analyse und zur analytischen Datenverwaltung bei chemisch-klinischen Labors, die folgendes enthält:

—eine erste Station (1) zur Sammlung aller zu prüfenden Muster (C) und zur Verteilung jeweils eines einzigen Teiles eines Musters (C) nach einer durch einen Mikroprozessor (EC1) angesteuerten Folge;

—eine zweite durch einen weiteren Mikroprozessor (EC2) angesteuerte Station (2) zur Analyse und Messung jedes einzigen Teiles eines durch die Station (1) verteilten Musters (C);

—einen Hauptrechner (EP) zur Verwaltung aller Grunddaten und zur Synchronisierung der durch die beiden Mikroprozessoren (EC1 und EC2) durchgeführten Arbeit, wobei diese Mikroprozessoren dazu bestimmt sind, den Betrieb und die Eingriffstakte der Antriebs- bzw. der Maschinenelemente beider Stationen (1 und 2) anzusteuern, und der bereits erwähnte Hauptrechner (EP) mit einem Anschlußgerät zum Zusammenwirken mit dem Bedienungsmann versehen ist, welches eine Tastatur (T) und einen in zwei Videoteile (VS und VI) geteilten Schirm beinhaltet, die zum Sichtbarmachen der Verfahrenskontrolle im ersten Grad bzw. des tatsächlich stattfindenden Zusammenwirkens zwischen dem Bedienungsmann und dem Rechner (EP) im zweiten Grad bestimmt sind.

2. Arbeitseinheit nach Anspruch 1, wobei das erwähnte Zusammenwirken mit dem Bedienungsmann das System zu einer vollständigen Arbeitseinheit dadurch verwandelt, daß die Software im Rechner (EP) für die folgenden Funktionen sorgt:

—Programm zur Verwaltung des Analysators durch die Ansteuerung der beiden Mikroprozessoren,

—Bereitstellung von Analysenprotokollen,

—Kalibrieren der Patientendaten und Feststellung der passenden Aanlysenart,

—Vorlegung der Ergebnisse und Herausgabe der Analysenberichte, und

—Qualitätskontrolle.

3. Arbeitseinheit nach Anspruch 1 bzw. 2, wobei die erwähnte erste Station (1) sowohl (a) einen die Muster tragenden waagerecht angeordneten und um seine Achse drehenden Scheibenteller (AS) enthält—worauf die einzelnen Muster peripherisch längs des Tellerrandes eingereiht werden—als auch (b) eine aus einem Mikropettor (MP) bestehende Vorrichtung zur Entnahme jeweils eines einzigen Musters enthält, wobei dieser die Muster tragende Teller (AS) mit mindestens einem Durchgangsloch (50) versehen ist, das in der Verteilungskreislinie der Muster (C) liegt, und dessen Lotachse parallel zur Achse ist, worum der Teller (AS) in die beiden Richtungen (S1 und S2) dreht.

4. Arbeitseinheit nach Anspruch 3, wobei der bereits erwähnte Mikropettor (MP) oberhalb der Verteilungskreislinie der Muster (C) und senkrecht dazu angeordnet ist und sich entsprechend der Drehungen des Tellers (AS) von einer ersten Ruhestellung bis zu einer zweiten Stellung zur Entnahme jeweils eines Teiles jedes einzigen Musters (C) aus dem Teller (AS) und schließlich zu einer dritten Endstellung bewegt, so die Versorgung der zweiten Analyse- und Messungsstation (2) mit dem entnommenen Teil des Musters (C) erfolgt.

5. Arbeitseinheit nach Anspruch 4, wobei die Versorgung der Analyse- und Messungsstation mit dem Muster (C) dadurch erfolgt, daß die Mikropettorschaarröhre (51) frei durch das in diesem Fall selbsttätig senkrecht zur Haarröhre (51) positionierte Durchgangsloch (50) durchgehen kann.

6. Arbeitseinheit nach Anspruch 4 bzw. 5, wobei die zweite Station (2) in zwei getrennt laufende Untersysteme (2a und 2b) geteilt ist, von denen das erste (2a) in eine Mischkammer (M) zum Aufmehmen des Musters (C) und dessen Reaktionsmittels (R) ausmündet, während das zweite in eine Küvettenstation (C1—Cn) endet, wobei jede Küvette durch die optische Achse einer Lichtmesservorrichtung (22) zur Analyse der dorthin durch die Mischkammer (M) versorgte Mischung durchquert wird.

7. Arbeitseinheit nach Anspruch 6, wobei das erwähnte Untersystem (2a) sowohl (a) mehrere Reaktionsmittelsbehälter (R1—Rn)—jeder deren mit Pumpen (PR1—PRn) versehen ist—als auch (b) einen Behälter für die Reinigungsflüssigkeit (LD) und der diesbezüglichen Pumpe (PLD) beinhaltet.

8. Arbeitseinheit nach Anspruch 7, wobei alle Pumpen mit der Mischkammer (M) verbunden sind und nach den durch den Rechner abgegebenen Takten und Folgen derart betätigt werden könne, daß jeweils abwechselnd ein einziges Reaktionsmittel (R) mit dem diesbezüglichen Muster (C) und die Reinigungsflüssigkeit zur Reinigung der Mischkammer (M) und deren Vorbereitung für die darauffolgende Operation ins Innere der erwähnten Mischkammer (M) einströmen kann.

9. Arbeitseinheit nach den Ansprüchen 6 bis 8, wobei die in der Mischkammer (M) erzeugten Mischungen stufenlos und folgegesteuert den Küvetten (C1—Cn) zugeführt werden, die durch die erwähnte Lichtmesservorrichtung (22) gleichzeitig gelesen werden.

10. Arbeitseinheit nach Anspruch 9, wobei jede Küvette (C1—Cn) sowohl mit einer Pumpe (PC1—PCn) zum Mischungsabfluß am Ende jedes Analysenvorganges als auch mit einer entsprechenden Pumpe (PLD1—PLDn) zur Reinigung der Küvette nach jedem Mischungsabfluß versehen ist.

**Claims**

1. Self-contained operating unit for the automatic analysis and analytical management of data in chemico-clinical laboratories comprising:
   —one collecting station to collect all samples (C) to be examined and dispense a single portion of sample (C) at a time according to a sequence controlled by a microprocessor (EC1);
   —a second analysis and measurement station (2), to examine and measure each single sample portion (C) supplied from the first station (1), controlled by another microprocessor (EC2); and
   —a main processor (EP) designed to manage all basic data and synchronize the activities of the two microprocessors (EC1 and EC2), said microprocessors (EC1 and EC2) being exclusively and respectively designed to control the activities and operate time of the mechanical and driving members of the two stations (1 and 2) and said processor (EP) being provided with a peripheral unit adapted to interact with the operator, which unit comprises a keyboard (T) and a screen divided into two video portions (VS and VI) designed to display the process control to the first level and display the operator's current interactions with the processor (EP) to the second level, respectively.

2. Operating unit according to claim 1, wherein said interactions with the operator make the system become a complete operating unit, due to the fact that the software in the processor (EP) hold the functions of:
   —programming the management of the scanner through the management of the two microprocessors;
   —carrying out analysis protocols;
   —calibrating the patient's data and stating the corresponding analysis type;
   —exhibiting results and reports; and
   —controlling the quality.

3. Operating unit according to claims 1 and 2, wherein said first station (1) comprises (a) a disc-shaped sample-holding tray (AS) disposed horizontally and rotating about its own axis, where the single samples are peripherally arranged along the tray edge, and (b) a withdrawal device for each individual sample consisting of a micropettor (MP), said sample-holding tray (AS) being provided with at least a through hole (50) disposed on the sample (C) dispensation circumference and having its vertical axis parallel to the axis of rotation of the tray (AS) in either way (S1 and S2).

4. Operating unit according to claim 3, wherein said micropettor (MP) is arranged above the sample (C) dispensation circumference and on the perpendicular thereto and moves in timed relationship with the rotation of the tray (AS) from one rest position to a second position at which the withdrawal of a single sample (AS) portion from the tray (AS) occurs and finally to a third final position at which the withdrawn sample portion is dispensed to the second analysis and measurement station (2).

5. Operating unit according to claim 4, wherein the sample (C) dispensing to the analysis and measurement station takes place as a result of the free passage of the capillary tube (51) of the micropettor (MP) through the through hole (50) in this case automatically positioned on the perpendicular to the capillary tube (51).

6. Operating unit according to claims 4 and 5, wherein the station (2) is divided into two subsystems (2a and 2b) running separately, one of them opening into a mixing chamber (M) designed to receive the sample (C) and the respective reagent (R), whereas the second opens into a station formed with basins (C1—Cn) each passed through by the optical axis of a photometric system (22) for the analysis determination of the mixture supplied thereinto from the mixing chamber (M).

7. Operating unit according to claim 6, wherein said first sub-system (2a) comprises (a) a plurality of containers holding the reagent (R1—Rn) provided each with pumps (PR1—PRn) and (b) a container for the detergent liquid (LD) having its respective pump (PLD).

8. Operating unit according to claim 7, wherein all pumps are connected to the mixing chamber (M) and can be operated according to times and sequences stated by the processor, so that inside said mixing chamber (M) there is the confluence of a single reagent (R) at a time and of the corresponding sample (C) portion, alternately with the detergent liquid designed to cleanse the chamber and prepare it to the next operation.

9. Operating unit according to claims 6 to 8, wherein mixtures prepared in the mixing chamber (M) are supplied sequentially and in a continuous stream to the basins (C1—Cn) which are simultaneously read by the photometric system (22).

10. Operating unit according to claim 9, wherein each basin (C1—Cn) is provided with a pump (PC1—PCn) for exhausting the mixture at the end of each analysis and with a corresponding pump (PLD1—PLDn) for washing the basin after each mixture evacuation.